# EUROPÄISCHE PATENTANMELDUNG

(11) **EP 2 679 912 A1**
(43) Veröffentlichungstag der Anmeldung: **01.01.2014**
(21) Anmeldenummer: 13401057.8
(22) Anmeldetag: 04.06.2013
(51) Int. Cl.: F24C 15/04, C03C 17/00

(54) **Gargerät und Verfahren zum Betreiben eines Gargerätes**

(30) Priorität: 28.06.2012 DE 102012105692
(71) Anmelder: Miele & Cie. KG, 33332 Gütersloh (DE)
(72) Erfinder: Harms, Wilko, 59609 Anröchte (DE); Zarth, Adelheid, 33332 Gütersloh (DE)

(57) **Zusammenfassung**

Gargerät (1) und Verfahren zum Betreiben eines Gargerätes (1) mit einem Gehäuse (2) und einem an dem Gehäuse (2) angeordneten beheizbaren Garraum (3). Es ist weiterhin eine den Garraum (3) verschließende Tür (4) vorgesehen. Dem Garraum (3) ist ferner wenigstens eine Scheibe (5) sowie wenigstens ein fluoreszenzfähiger Stoff (6) und eine fluoreszenzanregende Bestrahlungseinrichtung (7a, 7b) zugeordnet.

## Beschreibung

Die vorliegende Erfindung betrifft ein Gargerät mit einem Gehäuse und wenigstens einem an dem Gehäuse angeordneten beheizbaren Garraum, der mit wenigstens einer Tür verschlossen werden kann. Die vorliegende Erfindung betrifft auch ein Verfahren zum Betreiben eines Gargerätes.

In vielen Fällen kann es vorteilhaft sein, den Benutzer eines Gargerätes über den aktuellen Zustand des Gargerätes zu informieren. Unter anderem sind akustische Signale, insbesondere Hinweissignale, bei Gargeräten bekannt, um zum Beispiel das Ende eines Garvorgangs anzuzeigen. Auch Warnsignale können akustisch ausgegeben werden.

Nachteilig bei akustischen Signalen ist jedoch, dass solche Signale je nach Geräuschkulisse leicht überhört werden können. Läuft in der Küche beispielsweise das Radio, hat ein Benutzer ein mobiles Abspielgerät mit Kopfhörnern in Betrieb oder ist der Benutzer vielleicht schwerhörig, werden die akustisch ausgegebenen Hinweis- bzw. Warnsignale vielleicht nicht wahrgenommen.

In manchen Fällen sind auch optische Signale vorgesehen. Zum Beispiel sind an einem Gargerät oft beleuchtete Anzeigen angeordnet, die darauf hinweisen, ob der Garraum die gewünschte Temperatur erreicht hat bzw. ob die Heizeinrichtung gerade in Betrieb ist. Auch andere optische Anzeigen sind bekannt. Wenn an einem Gargerät beispielsweise ein Display vorgesehen ist, können verschiedene Informationen dort in Textform oder auch als Symbol angezeigt werden. Solche optischen Signale können jedoch schnell übersehen werden.

Das Nichtbeachten oder Nichtwahrnehmen von Signalen könnte aber zu einem schlechteren Garergebnis führen, wenn beispielsweise das Ende des Garvorgangs nicht bemerkt wird und das Gargut weiter im heißen Garraum verbleibt. Andererseits könnten dadurch aber auch Gefahren entstehen. Ist das Gerät z.B. im Pyrolysebetrieb, sollte die Garraumtür nicht geöffnet und wenn möglich auch nicht angefasst werden, da diese unter Umständen sehr heiß sein kann.

Es ist daher die Aufgabe der vorliegenden Erfindung, ein Gargerät und ein Verfahren zur Verfügung zu stellen, bei denen der Benutzer besser informierbar wird.

Diese Aufgabe wird gelöst durch ein Gargerät mit den Merkmalen des Anspruchs 1 und durch ein Verfahren mit den Merkmalen des Anspruchs 11. Bevorzugte Ausgestaltungen sind Gegenstand der Unteransprüche. Weitere Vorteile und Merkmale ergeben sich aus der allgemeinen Beschreibung und der Beschreibung zu dem Ausführungsbeispiel.

Das erfindungsgemäße Gargerät weist ein Gehäuse auf, an dem wenigstens ein beheizbarer Garraum mit wenigstens einer den Garraum verschließenden Garraumtür angeordnet ist. Weiterhin umfasst das Gargerät wenigstens eine Scheibe und einen fluoreszenzfähigen Stoff, die dem Garraum zugeordnet sind, sowie wenigstens eine fluoreszenzanregende Bestrahlungseinrichtung, insbesondere eine Beleuchtungseinrichtung. Dabei ist die wenigstens eine Scheibe insbesondere Teil eines Sichtfensters, das bevorzugt von der Garraumtür umfasst ist, durch das ein Benutzer in den Garraum einblicken kann.

Ein derart ausgestaltetes Gargerät biete viele Vorteile. Ein erheblicher Vorteil ist, dass ein Benutzer über eine insbesondere farbliche Illumination zumindest eines Teilbereichs der wenigstens einen Scheibe, hervorgerufen durch eine Anregung des dem Garraum zugeordneten fluoreszenzfähigen Stoffes mittels der fluoreszenzanregenden Bestrahlungseinrichtung, auf gewisse Zustände des Gargerätes, insbesondere des Garraums, zuverlässig hingewiesen werden kann. Die Scheibe biete somit die Möglichkeit, insbesondere wenn sie Teil eines Sichtfensters ist, das bevorzugt von der Garraumtür umfasst ist, einen Hinweis oder eine Warnung großflächig an einem Gargerät anzuzeigen bzw. optisch zu signalisieren. Dadurch kann ein Benutzer besser über gewisse Zustände des Gargeräts informiert werden, wenn er nicht unmittelbar neben dem Gargerät steht. Wird der fluoreszenzfähige Stoff nicht angeregt, ist die Scheibe bzw. das Sichtfenster im wesentlichen durchsichtig, was dem Benutzer im Falle des Sichtfensters ermöglicht, den Garvorgang durch die Scheibe bzw. das Sichtfenster hindurch zu beobachten und zu kontrollieren.

Bei dem erfindungsgemäßen Gargerät ist es z. B. möglich, die fluoreszenzanregende Bestrahlungseinrichtung während des Pyrolysebetriebs zu aktivieren. So kann ein Benutzer mittels der Illumination der Scheibe darauf hingewiesen werden, dass in dem Garraum extrem hohe Temperaturen vorherrschen. Es könnte weiterhin auch vorteilhaft sein, über die fluoreszierend beleuchtete Scheibe anzuzeigen, ob der Garraum in der Vorheizphase die gewünschte Temperatur erreicht hat. Über die großflächige Anzeige könnte ein Benutzer dann leicht auf diesen Zustand aufmerksam gemacht werden, auch wenn er sich etwas weiter entfernt von dem Gargerät aufhält. So kann auch die Energieeffizienz des Gargerätes gesteigert werden, da ein Benutzer schneller darauf aufmerksam wird, dass er das Gargut in den Garraum einbringen kann.

Solche oder ähnliche Warnungen, Hinweise und/oder Informationen können in verschiedenen Situationen vorgesehen sein, wobei sich das erfindungsgemäße Gargerät auch insbesondere für Leute eignet, die z. B. schlecht hören können und so nur schlecht akustische Signale wahrnehmen können.

Neben den zuvor beschriebenen Vorteilen bietet ein erfindungsgemäßes Gargerät zusätzlich auch vorteilhafte designtechnische Möglichkeiten. Die Scheibe kann z.B. auch im Ruhezustand des Garraums bzw. des Gargeräts zumindest in wenigstens einem Teilbereich optisch ansprechend, insbesondere farbig, illuminiert werden.

Bevorzugt ist der fluoreszenzfähige Stoff wenigstens abschnittsweise der wenigstens einen Scheibe zugeordnet. So kann erreicht werden, dass eine besonders intensive Fluoreszenz in der Scheibe erzeugt wird, wodurch die Scheibe besonders kräftig in der dem fluoreszenzfähigem Stoff entsprechenden Farbe leuchtet. So wird ein Gargerät zur Verfügung stellt, bei dem die Scheibe situationsabhängig bzw. zustandsabhängig durch das Anschalten der fluoreszenzanregenden Bestrahlungseinrichtung eingefärbt werden kann.

Ist die fluoreszenzanregende Bestrahlungseinrichtung ausgeschaltet, ist die Scheibe durchsichtig und der Benutzer kann durch die Scheibe hindurch in den Garraum einblicken, um den Garprozess zu verfolgen. Der fluoreszenzfähige Stoff ist dabei z. B. als Beschichtung zumindest bereichsweise auf die Scheibe aufgetragen. Jedoch ist zu beachten, dass eine solche Beschichtung vorteilhafter Weise die Durchsicht durch die Scheibe im nicht aktivierten bzw. angeregten Zustand des fluoreszenzfähigen Stoffes nicht wesentlich behindern sollte.

In besonders bevorzugten Ausgestaltungen ist der wenigstens eine fluoreszenzfähige Stoff wenigstens teilweise in die wenigstens eine Scheibe eingelagert. So kann eine dauerhafte Lösung zur Verfügung gestellt werden.

In vorteilhaften Ausgestaltungen ist wenigstens eine Bestrahlungseinrichtung der Tür und insbesondere einer Scheibe des Sichtfensters der Tür zugeordnet. So wird erreicht, dass die fluoreszenzanregende Bestrahlungseinrichtung in einer vorteilhaften Position zu dem fluoreszenzfähigen Stoff steht. Dadurch wird eine besonders effektive Anregung des fluoreszenzfähigen Stoffes erreicht.

Es ist weiterhin bevorzugt, dass wenigstens eine Bestrahlungseinrichtung eine UV-Lichtquelle ist. Dies stellt eine relativ einfache und relativ kostengünstige Methode zur Verfügung, um entsprechende UV-sensitive fluoreszenzfähige Stoffe anzuregen. Natürlich sind auch andere Bestrahlungseinrichtungen und insbesondere Beleuchtungseinrichtungen denkbar und können in entsprechenden Ausgestaltungen mit den entsprechend sensitiven fluoreszenzfähigen Stoffen sinnvoll eingesetzt werden.

Als fluoreszenzfähiger Stoff wird bevorzugt ein Metall verwendet. Dabei kommt insbesondere Eisen und/oder Cadmium-Selen in Frage. Diese beiden Metalle bzw. Metallverbindungen fluoreszieren im angeregten Zustand im grünen bzw. roten Farbraum. Es können natürlich auch weitere Metalle oder Metallverbindungen eingesetzt werden, um diese oder andere Farben an einer Scheibe zur Verfügung zu stellen. In anderen Ausgestaltungen können auch Nichtmetalle mit fluoreszierenden Eigenschaften mit entsprechenden fluoreszenzanregenden Bestrahlungseirichtungen vorteilhaft eingesetzt werden.

In anderen vorteilhaften Ausgestaltungen sind mehrere Scheiben an der Tür bzw. am Sichtfenster vorgesehen. Diese sind insbesondere hintereinander als Scheibenpaket angeordnet. Bei einem solchen Mehrscheibenaufbau können mehrere Scheiben mit jeweils wenigstens einem fluoreszenzfähigen Stoff ausgestattet sein.

Dabei weisen in besonders bevorzugten Ausgestaltungen wenigstens zwei Scheiben wenigstens abschnittsweise wenigstens einen unterschiedlichen fluoreszenzfähigen Stoff auf. Dadurch wird es möglich, die Scheibe in unterschiedlichen Farben zu illuminieren.

Dazu ist es besonders bevorzugt, dass wenigstens zwei Scheiben jeweils wenigstens eine separate fluoreszenzanregende Bestrahlungseinrichtung zugeordnet ist. Dadurch können die beiden Scheiben, welche unterschiedliche fluoreszenzanregende Stoffe aufweisen, durch das einzelne Anschalten der jeweiligen Bestrahlungseinrichtung in der entsprechenden Farbe illuminiert werden. Durch das Anschalten mehrerer fluoreszenzanregender Bestrahlungseinrichtungen an mehreren Scheiben wird es weiter möglich, auch Mischfarben zu erzeugen. Dadurch wird erreicht, dass die Garraumtür bzw. das Sichtfenster der Garraumtür optisch ansprechend in verschiedenen Farben beleuchtet werden können. Weiterhin können verschiedene Zustände des Gargerätes über die verschieden farbigen Einfärbungen der wenigstens einen Scheibe dargestellt und so einem Benutzer angezeigt werden.

Um mit einer Bestrahlungseinrichtung nur die dazugehörige Scheibe bzw. nur den daran vorgesehenen fluoreszenzanregenden Stoff anzuregen, sollte der Abstrahlwinkel der Bestrahlungseinrichtung zweckmäßig so klein gewählt sein, dass nur die zugehörige Scheibe illuminiert bzw. eingefärbt wird.

In weiteren bevorzugten Ausgestaltungen ist wenigstens eine Steuereinrichtung vorgesehen, die wenigstens eine fluoreszenzanregende Bestrahlungseinrichtung ansteuert. Wenn mehrere Bestrahlungseinrichtungen vorgesehen sind, ist es natürlich möglich, dass die wenigstens eine Steuereinrichtung verschiedene Bestrahlungseinrichtungen einzeln oder auch zusammen ansteuert. So wird das Illuminieren bzw. Einfärben von einzelnen Scheiben, insbesondere in unterschiedlichen einzelnen Farben oder auch in Mischfarben aus wenigstens zwei unterschiedlichen Farben möglich.

Das erfindungsgemäße Verfahren eignet sich zum Betreiben eines Gargerätes mit einem Gehäuse, an dem wenigstens ein beheizbarer Garraum mit wenigstens einer den Garraum verschließenden Garraumtür angeordnet ist, wobei das Gargerät ferner wenigstens eine Scheibe und einen fluoreszenzfähigen Stoff, die dem Garraum zugeordnet sind, sowie wenigstens eine fluoreszenzanregende Bestrahlungseinrichtung, insbesondere eine Beleuchtungseinrichtung, umfasst. Dabei regt die wenigstens eine fluoreszenzanregende Bestrahlungseinrichtung den wenigstens einen fluoreszenzfähigen Stoff derart an, dass dieser fluoresziert. Dabei kann die wenigstens eine Scheibe Teil eines Sichtfensters sein, das bevorzugt von der Garraumtür umfasst ist, durch das ein Benutzer in den Garraum einblicken kann.

Das erfindungsgemäße Verfahren eignet sich insbesondere zum Betreiben eines Gargerätes gemäß den zuvor beschriebenen Ausführungen.

Ein derart ausgestaltetes Verfahren bietet viele Vorteile. Ein erheblicher Vorteil ist, dass es möglich wird, zumindest einen Teilbereich der wenigstens einen Scheibe zu illuminieren, und zwar durch Anregung des wenigstens einen fluoreszenzfähigen Stoffes mittels der wenigstens einen fluoreszenzanregenden Bestrahlungseinrichtung, wobei insbesondere auch eine Illumination in einer oder mehreren Farben vorgesehen ist.. Durch die Wahl wenigstens eines entsprechenden fluoreszenzfähigen Stoffes kann eine Illumination der Scheibe, insbesondere in wenigstens einer bestimmten Farbe, erreicht werden. Der wenigstens eine fluoreszenzfähige Stoff kann dann durch die wenigstens eine fluoreszenzanregende Bestrahlungseinrichtung aktiviert bzw. zum Fluoreszieren angeregt werden. So kann einerseits zumindest ein Teilbereich der wenigstens einen Scheibe optisch ansprechend und insbesondere farblich illuminiert werden, wobei die wenigstens eine Scheibe Teil eines Sichtfensters sein kann, das bevorzugt von der Garraumtür umfasst ist. Bei ausgeschalteter Bestrahlungseinrichtung ist die Scheibe im Wesentlichen durchsichtig, wodurch dem Benutzer im Falle des Sichtfensters die Beobachtung und Überwachung eines Garvorgangs durch die Scheibe bzw. das Sichtfenster hindurch ermöglicht wird. Zusätzlich können über eine solche Illumination auf der Scheibe bestimmte Zustände des Gargerätes angezeigt bzw. optisch signalisiert werden. Z. B. ist es möglich, über die Illumination bzw. die Einfärbung der Scheibe eine Warnung bezüglich der hohen Temperaturen während eines Pyrolysevorgangs zu signalisieren.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Fig. 1:: eine stark schematische Darstellung eines erfindungsgemäßen Gargerätes in einer leicht perspektivischen Ansicht;
- Fig. 2:: eine stark schematische Ausschnittsansicht auf den geschlossen Garraum eines erfindungsgemäßen Gargerätes mit ausgeschalteter fluoreszenzanregender Bestrahlungseinrichtung;
- Fig. 3:: die Ansicht gemäß Fig. 2 mit eingeschalteter fluoreszenzanregender Bestrahlungseinrichtung;
- Fig. 4:: eine stark schematische Schnittansicht durch die Tür eines erfindungsgemäßen Gargerätes; und
- Fig. 5:: eine weitere Ansicht der Tür gemäß Fig. 4.

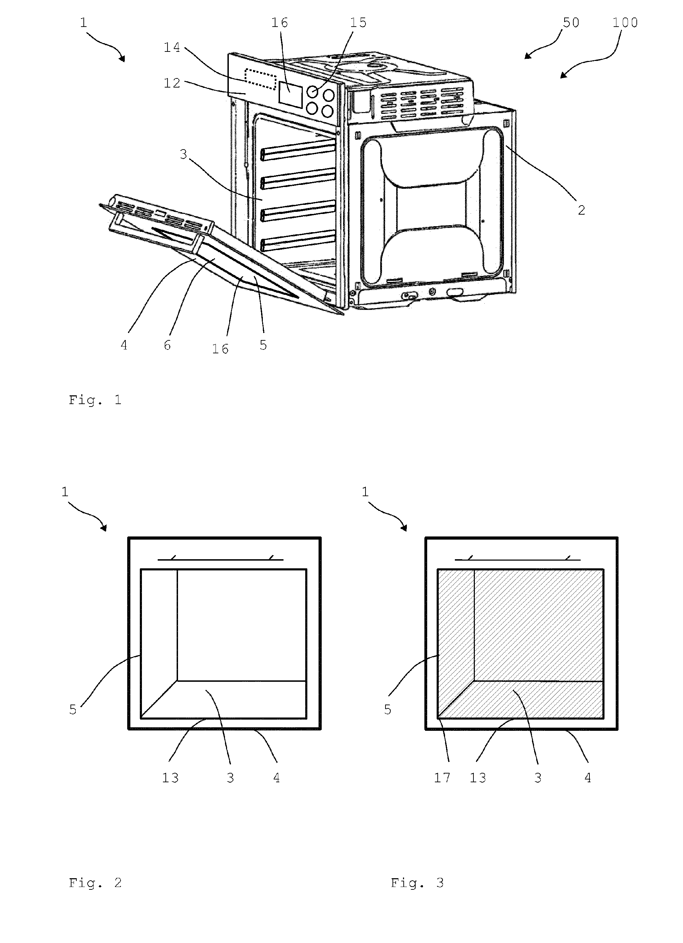

In Fig. 1 ist in einer perspektivischen Ansicht ein erfindungsgemäßes Gargerät 1 schematisch dargestellt. Das hier gezeigte Gargerät 1 ist dabei als Einbaugerät 50 bzw. als Backofen 100 ausgeführt. Der Backofen 100 weist ein Gehäuse 2 auf, an dem ein Garraum 3 aufgenommen ist. Der Garraum 3 ist mit einer Tür 4 verschließbar, in der ein Sichtfenster 13 vorgesehen ist.

Oberhalb des Garraumes 3 ist eine Bedienblende 14 angeordnet, an der Bedienelemente 15 und eine Anzeigeeinheit 16 angeordnet sind. Hinter der Bedienblende 14 ist gestrichelt eine Steuereinrichtung 12 angedeutet.

Die Tür 4 und insbesondere das Sichtfenster 13 der Tür 4 umfasst in dem hier gezeigten Ausführungsbeispiel zwei Scheiben 5. Ferner ist an der Tür 4 ein Griff 20 in Form einer Griffstange angebracht, als Handhabe zum Öffnen und Schließen der Tür 4. Die beiden Scheiben 5 der Tür 4 sind mit fluoreszenzfähigen Stoffen 6 versehen. Dabei sind die fluoreszenzfähigen Stoffe 6 derart an jeder der Scheiben vorgesehen, dass die Durchsicht durch die beiden Scheiben im Wesentlichen nicht behindert ist. In dem hier gezeigten Beispiel sind die fluoreszenzfähigen Stoffe 6 in die Scheiben 5 eingelagert. Denkbar sind aber auch Varianten, in denen wenigstens ein fluoreszenzfähiger Stoff 6 z.B. als Beschichtung an zumindest einer Scheibenseite über zumindest einen Teilbereich der Scheibenfläche auf die jeweilige Scheibe 5 aufgebracht sind.

Auch andere Ausführungen mit nur einer oder auch mehreren zu einer Garraumtür 4 bzw. zu einem Sichtfenster 13 gehörenden Scheiben 5 sind denkbar. Dabei kann insbesondere bei einem Mehrscheibenaufbau auch nur an einzelnen Scheiben 5 ein fluoreszenzfähiger Stoff 6 vorgesehen sein. So kann auch zum Beispiel bei einer Tür 4 bzw. bei einem Sichtfenster 13 mit vier im Wesentlichen parallel zueinander angeordneten Scheiben 5 nur eine Scheibe 5 oder zumindest nicht jede der vier Scheiben mit einem fluoreszenzanregenden Stoff ausgerüstet sein.

Es kann aber gerade bei einem Mehrscheibenaufbau einer Tür 4 vorteilhaft sein, mehrere Scheiben 5 mit einem oder auch mit unterschiedlichen fluoreszenzfähigen Stoffen 6 auszustatten. So kann dann zum Beispiel je nach Anzahl der angeregten Scheiben 5 eine andere Intensität oder Farbgebung hinsichtlich des Gesamteindruck der illuminierten Garraumtür 4 bzw. des illuminierten Sichtfensters 13 erreicht werden. Es sind dann auch Mischfarben möglich, wenn unterschiedliche, insbesondere verschiedenfarbige, fluoreszenzfähige Stoffe verwendet werden.

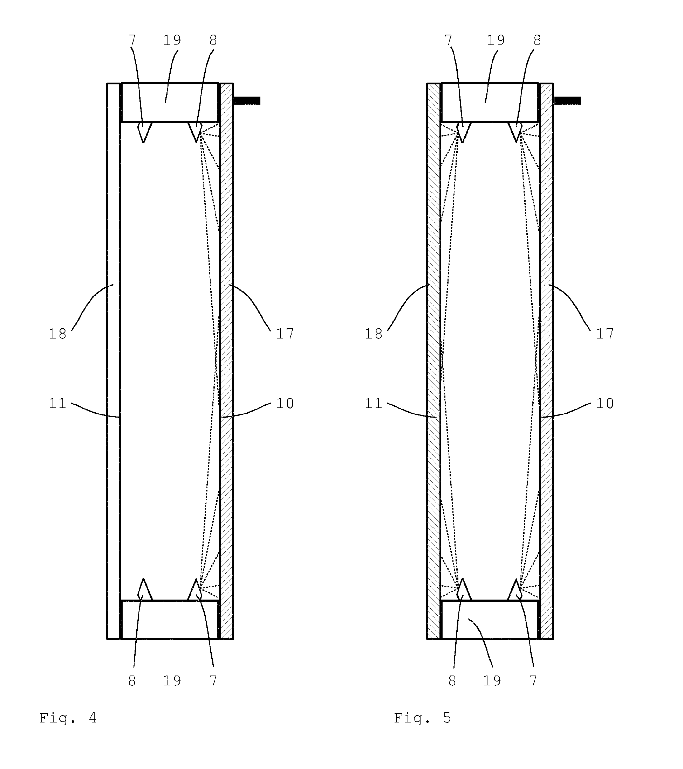

Jeder Scheibe 5 ist in diesem Ausführungsbeispiel eine eigene fluoreszenzanregende Bestrahlungseinrichtung in Form einer fluoreszenzanregenden Beleuchtungseinrichtung 7a, 7b zugeordnet (vgl. Fig. 4).

In Fig. 2 ist rein schematisch die Einsicht in einen Garraum 3 eines erfindungsgemäßen Gargerätes 1 dargestellt. Man sieht die Tür 4 mit dem Sichtfenster 13, durch das ein Benutzer in den Garraum 3 einblicken kann. In dem hier abgebildeten Zustand des Gargerätes 1 ist keine fluoreszenzanregende Beleuchtungseinrichtung 7a, 7b eingeschaltet. So ist das Sichtfenster 13 transparent, wodurch der Einblick in den Garraum 3 ungehindert möglich ist.

Die gleiche Ansicht gemäß Fig. 2 ist in Fig. 3 dargestellt. Im Unterschied zur Fig. 2 ist in der vorderen Scheibe 17 die zugeordnete fluoreszenzanregende Beleuchtungseinrichtung 7a, 7b eingeschaltet. Dadurch wird der fluoreszenzfähige Stoff 6 in der vorderen Scheibe 17 angeregt, wodurch diese Scheibe 17 in der entsprechenden Farbe des zugehörigen fluoreszenzfähigen Stoffes 6 leuchtet.

Je nach Leuchtkraft und Farbe der Fluoreszenz kann nun ein Einblick in den Garraum 3 praktisch ungestört möglich sein. Es kann aber auch schwieriger oder fast unmöglich sein, Details im Inneren zu erkennen.

Eine Einfärbung des Sichtfensters 13 durch eine Illumination wenigstens einer Scheibe 5 im aktiven Betriebszustand und/oder Ruhezustand des Gargeräts 1 ermöglicht ein optisch ansprechendes Design. Je nach Anzahl der Scheiben 5 und je nach verwendeten fluoreszenzfähigen Stoffen 6 ist auch eine unterschiedliche Einfärbung und/oder Intensität der Einfärbung des Sichtfensters 13 möglich.

Neben dem optisch schönen Design kann das leuchtend eingefärbte Sichtfenster 13 insbesondere auch als optisches Warn- und/oder Hinweissignal fungieren, das durch die beleuchtete Scheibe 5 sehr großflächig ist. So ist es z.B. möglich, einen bestimmten Zustand des Gargerätes 1 mit Hilfe des Sichtfensters 13 praktisch unübersehbar auszugeben. Beispielsweise könnte der Pyrolysevorgang mit einer leuchtenden, rot eingefärbten Scheibe 5 des Sichtfensters 13 einhergehen. Solche optischen Warn- bzw. Hinweissignale können z.B. für Schwerhörige erhebliche Vorteile bieten, da die farblich illuminierte Tür gut sichtbar ist.

In Fig. 4 ist rein schematisch der Aufbau der Tür 4 eines erfindungsgemäßen Backofens 100 abgebildet. Dabei ist in der hier gezeigten Schnittansicht gut zu erkennen, dass an einer Rahmenkonstruktion 19 zwei Scheiben 17 und 18 eines von der Tür 4 umfassten Sichtfensters 13 im Wesentlichen parallel zueinander angeordnet sind. In die vordere Scheibe 17 ist als fluoreszenzfähiger Stoff 6 Eisen 10 eingelagert. Die hintere Scheibe 18 umfasst als fluoreszenzfähigen Stoff 6 Cadmium-Selen 11.

Den beiden Scheiben 17, 18 ist jeweils eine eigenständige fluoreszenzanregende Beleuchtungseinrichtung 7a, 7b, jeweils umfassend eine obere Beleuchtungseinheit 7a und eine untere Beleuchtungseinheit 7b welche hier als obere UV-Lichtquelle 8a bzw. als untere UV-Lichtquelle 8b ausgeführt sind, zugeordnet, die mit der Steuereinrichtung 12 in Verbindung steht. Dabei sind die UV-Lichtquellen 8a, 8b derart orientiert, dass sie nur auf die jeweils zugehörige Scheibe 17, 18 leuchten. So kann vermieden werden, dass durch das Einschalten nur einer fluoreszenzanregenden Beleuchtungseinrichtung 7a, 7b beide Scheiben 17, 18 illuminiert werden.

In einer anderen als der hier abgebildeten Ausführungsform können die Beleuchtungseinheiten 7a, 7b der Beleuchtungseinrichtungen 7 und insbesondere die UV-Lichtquellen 8a, 8b alternativ oder ergänzend zu oben und unten auch links und rechts der Scheibe 5, dem Sichtfenster 13 und/oder der Garraumtür 4 angeordnet sein, aber auch eine nur einseitige Anordnung ist denkbar.

Bei weiteren, hier nicht abgebildeten Ausführungsformen können auch mehrere fluoreszenzanregende Beleuchtungseinrichtungen 7a, 7b vorgesehen sein, welche unterschiedliche fluoreszenzfähige Stoffe 6 anregen, wobei jeweils nur einer der unterschiedlichen fluoreszenzfähigen Stoffe 6 an nur einer von mehreren Scheiben 5 vorgesehen sein kann oder auch mehrere unterschiedliche fluoreszenzfähige Stoffe 6 gemeinsam auf einer Scheibe 5 vorgesehen sein können. Dabei können zum Beispiel Beleuchtungseinrichtungen 7a, 7b verwendetet werden, die unterschiedliche Anregungswellenlängen abstrahlen. Dazu können zum Beispiel vorteilhaft auch Filter eingesetzt werden, die nur bestimmte Anregungswellenlängen der Beleuchtungseinrichtung 7a, 7b passieren lassen.

Auch andere fluoreszenzanregende Beleuchtungseinrichtungen 7a, 7b wie zum Beispiel eine Lasereinrichtung können bei einem erfindungsgemäßen Gargerät eingesetzt werden. Dann sollte zweckmäßiger Weise ein auf den Laser abgestimmter fluoreszenzfähiger Stoff 6, beispielsweise ein entsprechendes Fluorochrom, gewählt werden.

In Fig. 4 ist nur die zur vorderen Scheibe 17 gehörige fluoreszenzanregende Beleuchtungseinrichtung 7a, 7b eingeschaltet. Daher ist auch nur die vordere Scheibe 17 beleuchtet, und da in diesem Fall für die vordere Scheibe 17 Eisen 10 als fluoreszenzfähiger Stoff 6 verwendet wurde, erscheint an der Scheibe 17 bzw. am Sichtfenster 13 eine Illumination in einem grünen Farbton.

Die gleiche Tür gemäß Fig. 4 ist auch in Fig. 5 dargestellt. Im Gegensatz zur Fig. 4 sind hier beide Beleuchtungseinrichtungen 7a, 7b eingeschaltet und regen somit die fluoreszenzfähigen Stoffe 6 in der vorderen Scheibe 17 und in der hinteren Scheibe 18 an.

Während die vordere Scheibe 17 durch das verwendete Eisen 10 im grünlichen Farbton leuchtet, wird die hintere Scheibe 18 durch das verwendete Cadmium-Selen 11 als fluoreszenzfähigen Stoff 6 eine Illumination in einem roten Farbton hervorgerufen. Bei einer gemäß Fig. 5 beleuchteten Tür 4 erscheint das Sichtfenster 13 dadurch für den Benutzer bzw. den Betrachter in einer Illumination in einer Mischfarbe aus grün und rot.

Wird im Gegensatz dazu entweder nur die vordere Scheibe 17 oder aber auch nur die hintere Scheibe 18 mittels der entsprechenden fluoreszenzanregenden Beleuchtungseinrichtung 7 beleuchtet, leuchtet entweder die vordere Scheibe 17 oder die hintere Scheibe 18 in einem Farbton entsprechend des jeweiligen fluoreszenzfähigen Stoffes 6.

Bei der Verwendung von mehr als zwei Scheiben 5 können entsprechende und insbesondere vielfältige Mischfarben im illuminierten Sichtfenster 13 entstehen. So kann zum einen das Sichtfenster 13 optisch ansprechend illuminiert werden, zum anderen können verschiedene Farben dem Benutzer verschiedene Zustände des Gargerätes 1 anzeigen.

Je nach Ausgestaltung können unterschiedliche fluoreszenzanregende Stoffe 6 beliebig gewählt werden, wobei z.B. Metalle bzw. Metallverbindungen vorteilhaft eingesetzt werden können.

Zusätzliche konventionelle Lichtquellen zur Beleuchtung des Garraumes 2 und/oder der wenigstens einen Scheibe 5 bzw. des Sichtfensters 13 sind möglich.

Angaben wie oben und unten, vorne und hinten oder links und rechts beziehen sich auf die betriebsgemäße Aufstellposition eines Gargeräts.

Es liegt weiterhin im Rahmen des Könnens eines Fachmanns, das beschriebene Ausführungsbeispiel in nicht dargestellter Weise abzuwandeln, um die beschriebenen Effekte zu erzielen, und dabei den Rahmen der Erfindung zu verlassen.

### Bezugszeichenliste

- 1: Gargerät
- 2: Gehäuse
- 3: Garraum
- 4: Tür
- 5: Scheibe
- 6: fluoreszenzfähiger Stoff
- 7a, 7b: fluoreszenzanregende Bestrahlungseinrichtung, Beleuchtungseinrichtung, Beleuchtungseinheit
- 8a, 8b: UV-Lichtquelle
- 9: Metall
- 10: Eisen (Fe)
- 11: Cadmium-Selen
- 12: Steuereinrichtung
- 13: Sichtfenster
- 14: Bedienblende
- 15: Bedienelemente
- 16: Anzeigeeinrichtung
- 17: vordere Scheibe
- 18: hintere Scheibe
- 19: Rahmenkonstruktion
- 20: Türgriff, Griffstange
- 50: Einbaugerät
- 100: Backofen

## Patentansprüche

1. Gargerät (1) mit einem Gehäuse (2) und wenigstens einem an dem Gehäuse (2) angeordneten beheizbaren Garraum (3) mit wenigstens einer den Garraum (3) verschließenden Tür (4) und wenigstens einer dem Garraum (3) zugeordneten Scheibe (5),
**dadurch gekennzeichnet,**
**dass** das Gargerät (1) wenigstens einen dem Garraum (3) zugeordneten fluoreszenzfähigen Stoff (6) und wenigstens eine dem Garraum (3) zugeordnete fluoreszenzanregende Bestrahungseinrichtung (7a, 7b) umfasst.

2. Gargerät (1) nach dem vorhergehenden Anspruch, **dadurch gekennzeichnet, dass** der fluoreszenzfähige Stoff (6) wenigstens abschnittsweise der wenigstens einen Scheibe (5) zugeordnet ist.

3. Gargerät (1) nach einem der vorhergehenden Ansprüche, **dadurch gekennzeichnet, dass** der wenigstens eine fluoreszenzfähige Stoff (6) wenigstens teilweise in die wenigstens eine Scheibe (5) eingelagert ist.

4. Gargerät (1) nach einem der vorhergehenden Ansprüche, **dadurch gekennzeichnet, dass** die wenigstens eine Scheibe (5) Teil eines Sichtfensters (13) ist, welches insbesondere von der Tür (4) umfasst ist

5. Gargerät (1) nach einem der vorhergehenden Ansprüche, **dadurch gekennzeichnet, dass** die wenigstens eine Bestrahlungseinrichtung (7a, 7b) der Scheibe (5) und insbesondere der Tür (4) zugeordnet ist.

6. Gargerät (1) nach einem der vorhergehenden Ansprüche, **dadurch gekennzeichnet, dass** die wenigstens eine Bestrahlungseinrichtung (7a, 7b) eine Beleuchtungseinrichtung (7a, 7b) ist und insbesondere eine UV-Lichtquelle (8) umfasst.

7. Gargerät (1) nach einem der vorhergehenden Ansprüche, **dadurch gekennzeichnet, dass** wenigstens ein fluoreszenzfähiger Stoff (6) wenigstens ein Metall (9) und insbesondere Eisen (10) und/oder Cadmium-Selen (11) ist.

8. Gargerät (1) nach einem der vorhergehenden Ansprüche, **dadurch gekennzeichnet, dass** mehrere Scheiben (5) dem Garraum (3) zugeordnet sind und insbesondere Teile des Sichtfensters (13)sind.

9. Gargerät (1) nach dem vorhergehenden Anspruch, **dadurch gekennzeichnet, dass** wenigstens zwei Scheiben (5) wenigstens abschnittsweise wenigstens einen unterschiedlichen fluoreszenzfähigen Stoff (6) aufweisen.

10. Gargerät (1) nach einem der Ansprüche 8 oder 9, **dadurch gekennzeichnet, dass** wenigstens zwei Scheiben (5) jeweils wenigstens eine separate fluoreszenzanregende Bestrahlungseinrichtung (7) zugeordnet ist.

11. Gargerät (1) nach einem der vorhergehenden Ansprüche, **dadurch gekennzeichnet, dass** eine Steuereinrichtung (12) vorgesehen ist, die die wenigstens eine fluoreszenzanregende Bestrahlungseinrichtung (7) ansteuert.

12. Verfahren zum Betreiben eines Gargerätes (1) mit einem Gehäuse (2) und wenigstens einem an dem Gehäuse (2) angeordneten beheizbaren Garraum (3) mit wenigstens einer den Garraum (3) verschließenden Tür (4) und wenigstens einer dem Garraum (3) zugeordneten Scheibe (5),
**dadurch gekennzeichnet,**
**dass** wenigstens eine dem Garraum (3) zugeordnete fluoreszenzanregende Bestrahlungseinrichtung (7a, 7b) wenigstens einen dem Garraum (3) zugeordneten fluoreszenzfähigen Stoff (6) zur Fluoreszenz anregt.
